# FASCICULE DE BREVET EUROPEEN

(11) **EP 1 968 855 B1**
(45) Date de publication et mention de la délivrance du brevet: **07.04.2010**
(21) Numéro de dépôt: 06847225.7
(22) Date de dépôt: 29.12.2006
(51) Int. Cl.: B64G 1/38

(54) **DISPOSITIF D'AMORTISSEMENT ACTIF DES VIBRATIONS SUBIES PAR UN ELEMENT FRAGILE D'UN EQUIPEMENT EN MOUVEMENT, A AUTO-ALIMENTATION**
VORRICHTUNG ZUR AKTIVEN DÄMPFUNG DER AUF EINEN FRAGILEN TEIL EINER BEWEGLICHEN AUSRÜSTUNG AUSGEÜBTEN VIBRATIONEN MIT AUTONOMER STROMVERSORGUNG
DEVICE FOR THE ACTIVE DAMPING OF THE VIBRATIONS EXPERIENCED BY A FRAGILE PART OF MOVING EQUIPMENT, WITH AUTONOMOUS POWER SUPPLY

(30) Priorité: 03.01.2006 FR 0650015
(43) Date de publication de la demande: 17.09.2008
(73) Titulaire: THALES, 92526 Neuilly sur Seine (FR)
(72) Inventeur: BLANCHARD, Laurent, F-06370 Mouans-Sartoux (FR); DUPUIS, Jean, F-06810 Auribeau sur Siagne (FR)
(74) Mandataire: Esselin, Sophie
(86) Numéro de dépôt international: PCT/FR2006/051440
(87) Numéro de publication internationale: WO 2007/077384

(56) Documents cités:
- EP-A- 1 170 524
- EP-A- 1 422 440
- US-A- 5 734 246
- US-B1- 6 533 257

## Description

L'invention concerne les dispositifs destinés à amortir les vibrations que subissent des éléments fragiles au sein d'un équipement qui vibre pendant la phase de transport précédant son utilisation, comme par exemple un satellite en phase de lancement.

On entend ici par « élément fragile » tout élément physique dont le fonctionnement peut être perturbé de façon passagère ou définitive par des vibrations induites pendant que l'équipement dont il fait partie est déplacé avant d'être utilisé. Il pourra par exemple s'agir d'un miroir d'un instrument d'observation spatiale, d'un boîtier de mesure de grandeur(s) physique(s), d'un boîtier de commande, d'un équipement optique, d'une tuyère plasmique, d'une roue cinétique, d'un gyromètre ou d'un gyroscope.

Dans certains domaines, comme par exemple le domaine spatial, des équipements sont soumis au moins passagèrement à des déplacements et/ou des accélérations plus ou moins importants qui font vibrer leur structure et donc certains éléments qui s'y trouvent couplés (ou solidarisés). C'est notamment le cas des satellites qui sont placés en orbite au moyen de lanceurs ou de certains équipements qui sont installés dans les navettes spatiales.

Lorsqu'un tel équipement comporte un élément fragile, ce dernier doit être « dimensionné » (ou adapté) et/ou couplé à des dispositifs d'amortissement, de manière à supporter les facteurs de charge, éventuellement pendant une phase de lancement.

Cela entraîne un surcroît de masse et/ou d'encombrement, une complexité et des coûts de développement importants, ainsi qu'une éventuelle dégradation de résolution dans le cas d'éléments mettant en oeuvre certains mécanismes de haute sensibilité.

Par ailleurs, lorsque le dispositif d'amortissement utilisé est de type passif, son efficacité est limitée, et lorsque le dispositif d'amortissement utilisé est de type actif, il requiert l'activation d'une alimentation électrique avant le début de la mission, ce qui n'est généralement pas admis, notamment dans le domaine spatial.

On connaît du document US-A-5,734,246 A un dispositif d'amortissement de vibrations pour un équipement devant être déplacé et comportant une structure à laquelle est couplé un élément fragile à protéger desdites vibrations, comprenant au moins un capteur couplé à la structure et agencé pour délivrer des signaux de mesure représentatifs de vibrations subies par ledit équipement, des moyens de contrôle alimentés électriquement et agencés pour déduire de chaque signal de mesure au moins une amplitude de déplacement destinée à compenser au moins partiellement lesdites vibrations subies par la structure, et pour délivrer des signaux de commande représentatifs de chaque amplitude déterminée, et des moyens de transduction piézoélectrique intercalés entre ladite structure et l'élément fragile et agencés pour convertir lesdits signaux de commande en déplacement(s) de manière à amortir au moins partiellement pour l'élément fragile les vibrations subies par ledit équipement.

Aucun dispositif d'amortissement connu n'apportant une entière satisfaction, l'invention a donc pour but d'améliorer la situation.

Elle propose à cet effet un dispositif d'amortissement de vibrations pour un équipement destiné à être déplacé et comportant une structure à laquelle sont couplés au moins un premier élément (réputé non fragile) et un second élément devant être protégé des vibrations du fait qu'il est réputé fragile.

Ce dispositif d'amortissement de vibrations comprend :
- des premiers moyens de transduction piézoélectrique intercalés entre la structure et le premier élément (et solidarisés à ceux-ci) et chargés de convertir l'énergie mécanique de vibration de la structure en énergie électrique,
- au moins un capteur couplé à la structure et chargé de délivrer des signaux de mesure représentatifs des vibrations subies par l'équipement,
- des moyens de contrôle alimentés électriquement par l'énergie électrique (délivrée par les premiers moyens de transduction) et chargés de déduire de chaque signal de mesure (délivré par un capteur) au moins une amplitude de déplacement destinée à compenser au moins partiellement les vibrations subies par la structure, et de délivrer des signaux de commande représentatifs de chaque amplitude ainsi déterminée, et
- des seconds moyens de transduction piézoélectrique intercalés entre la structure et le second élément (et solidarisés à ceux-ci) et chargés de convertir les signaux de commande en déplacement(s) afin d'amortir au moins partiellement pour le second élément les vibrations subies par son équipement.

Ainsi, le dispositif d'amortissement est de type actif tout en étant autonome sur le plan de son alimentation électrique, du fait qu'il la génère.

Le dispositif selon l'invention peut comporter d'autres caractéristiques qui peuvent être prises séparément ou en combinaison, et notamment :
- au moins deux capteurs chargés de délivrer des signaux de mesure représentatifs de vibrations subies par la structure suivant des directions différentes, et des seconds moyens de transduction comprenant au moins deux transducteurs chargés de déplacer le second élément selon des directions différentes ;
- chaque capteur peut être chargé d'effectuer des mesures de type accélérométrique ;
- ses premiers moyens de transduction peuvent être réalisés dans un matériau piézoélectrique choisi parmi des monocristaux piézoélectriques et des céramiques piézoélectriques ;
- ses seconds moyens de transduction et/ou chaque capteur peuvent être réalisés dans un matériau piézoélectrique choisi parmi des monocristaux piézoélectriques et des céramiques piézoélectriques ;
   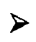 ses seconds moyens de transduction et/ou chaque capteur peuvent être
      constitués d'au moins un empilement d'au moins une couche du matériau piézoélectrique.
      - chaque transducteur (des seconds moyens de transduction) et le capteur correspondant peuvent éventuellement constituer ensemble deux parties complémentaires d'un même empilement de couches dudit matériau piézoélectrique.
- lorsque l'équipement (ou le second élément) comprend des moyens destinés à amortir mécaniquement le second élément, et de capacités d'amortissement connues, les moyens de contrôle peuvent être chargés de déduire chaque amplitude de déplacement de chaque signal de mesure compte tenu des capacités d'amortissement ;
- ses moyens de contrôle peuvent être agencés de manière à être activés et désactivés à des instants choisis.

L'invention propose également un équipement muni d'un dispositif d'amortissement de vibrations du type de celui présenté ci-avant.

L'invention est particulièrement bien adaptée, bien que de façon non exclusive, au domaine spatial et au domaine du transport, notamment ferroviaire.

D'autres caractéristiques et avantages de l'invention apparaîtront à l'examen de la description détaillée ci-après, et des dessins annexés, sur lesquels :

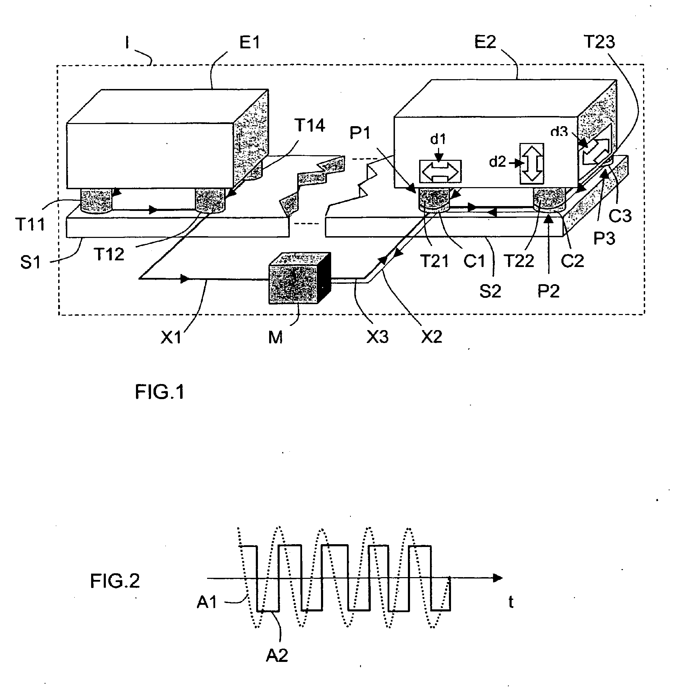

- la figure 1 illustre de façon très schématique et fonctionnelle un équipement comprenant des premier et second éléments et un exemple de réalisation d'un dispositif d'amortissement du second élément selon l'invention,
- la figure 2 est un diagramme illustrant un exemple de courbe d'évolution temporelle (t) d'un signal de mesure correspondant à une direction choisie, et un exemple de courbe d'évolution temporelle des signaux de commande représentatifs de l'amplitude du déplacement à appliquer au second élément suivant la direction choisie compte tenu de la courbe d'évolution temporelle des vibrations.

Les dessins annexés pourront non seulement servir à compléter l'invention, mais aussi contribuer à sa définition, le cas échéant.

L'invention a pour objet de permettre l'amortissement au moins partiel pour un élément fragile des vibrations subies par un équipement en mouvement dont il fait partie.

Dans ce qui suit, on considère à titre d'exemple non limitatif que l'équipement est un instrument d'observation solidarisé au moins partiellement à au moins un satellite devant être placé en orbite par une fusée afin de remplir une mission d'observation spatiale de la Terre ou d'une partie de l'univers, depuis l'espace.

Mais l'invention n'est pas limitée à ce type d'équipement. Elle concerne en effet tout équipement, spatial ou non, subissant des vibrations lorsqu'il est déplacé et comprenant une structure à laquelle sont solidarisés (ou couplés) au moins un premier élément réputé non fragile et un second élément fragile devant être protégé de ces vibrations. Il pourra donc s'agir, par exemple, d'un satellite, ou d'un véhicule de transport terrestre, comme par exemple une automobile ou un camion, ou encore d'un avion.

Comme cela est illustré sur la figure 1, l'instrument (ou équipement) I comprend une structure S1, S2 comportant une première partie S1 à laquelle est solidarisé (ou couplé) un premier élément E1 réputé non fragile, comme par exemple un boîtier électronique, et une seconde partie S2 à laquelle est solidarisé un second élément E2 réputé fragile, comme par exemple un miroir, des roues cinétiques et d'autres instruments de mesure, ou un « équipement optique ».

L'invention propose un dispositif destiné à amortir pour le second élément E2 les vibrations subies par la structure S1, S2 de l'équipement 1 (et donc par ce dernier). Ce dispositif comprend au moins des premiers moyens de transduction piézoélectrique T1 i, au moins un capteur Cj, un module de contrôle MC, et des seconds moyens de transduction piézoélectrique T2k.

Les premiers moyens de transduction piézoélectrique T1i sont intercalés entre la première partie S1 de la structure et le premier élément E1, tout en leur étant solidarisé. Ils sont chargés de convertir l'énergie mécanique de vibration de la structure en énergie électrique.

Les premiers moyens de transduction T1i sont par exemple réalisés dans un matériau piézoélectrique tel que les monocristaux piézoélectriques. Ils pourraient être également réalisés avec des céramiques piézoélectriques. D'une manière générale, tout type de matériau piézoélectrique peut être utilisé dès lors qu'il permet de convertir une énergie suffisamment importante pour alimenter électriquement le module de commande MC et lui permettre de fonctionner.

Par exemple, et comme illustré sur la figure 1, les premiers moyens de transduction T1 i se présentent sous la forme de quatre plots identiques et de faible hauteur T11 à T14 (i = 1 à 4). Sur la figure 1 seuls apparaissent les plots T11 à T13 du fait de la perspective. Leur nombre n'est pas limité à quatre. Toute valeur supérieure ou égale à un (1) peut être envisagée. Par ailleurs, chaque plot T1 i peut être éventuellement constitué d'un empilement de couches de matériau piézoélectrique afin de réduire la tension (les hautes tensions peuvent en effet être à l'origine de problèmes tels que le claquage).

Grâce à l'utilisation d'un matériau piézoélectrique, les premiers moyens de transduction T1 i constituent une première interface électromécanique compacte et légère qui constitue un générateur de courant électrique sans impacter le poids de l'équipement 1. L'énergie électrique résultant de la conversion de l'énergie mécanique de vibration est donc ici, à titre d'exemple, un micro-courant sous tension électrique (assez) élevée.

Le courant produit par les premiers moyens de transduction T1 i est collecté par un conducteur électrique (par exemple un câble) X1 qui est raccordé au module de contrôle MC.

Chaque capteur Cj est couplé (solidarisé) à la seconde partie S2 de la structure et est chargé de délivrer des signaux de mesure qui représentent des vibrations subies par ladite structure dans une direction choisie dj. Le nombre de capteurs Cj est au moins égal à un (1). Mais, il est préférable que le nombre de capteurs Cj soit au moins égal à deux (j = 1 à 2), et de préférence égal à trois (j = 1 à 3), comme illustré sur la figure 1. En présence de trois capteurs C1 à C3, on peut ainsi mesurer les vibrations subies par la seconde partie S2 de la structure suivant trois directions différentes d1 à d3, perpendiculaires entre elles.

De préférence, chaque capteur Cj est agencé de manière à effectuer des mesures de type accélérométrique suivant la direction dj, afin de délivrer des signaux représentatifs de ses mesures accélérométriques. Mais, on peut utiliser d'autres types de capteurs, comme par exemple des capteurs destinés à mesurer des forces au niveau des interfaces (dans ce cas la compensation tend à s'opposer aux efforts mesurés).

Chaque capteur Cj est par exemple réalisé dans un matériau piézoélectrique tel que les monocristaux piézoélectriques. Il pourrait être également réalisé avec des céramiques piézoélectriques. D'une manière générale, tout type de matériau piézoélectrique peut être utilisé dès lors qu'il permet de générer un signal de mesure sous la forme d'un courant suffisamment important pour être analysable par le module de commande MC.

Par exemple, et comme illustré sur la figure 1, chaque capteur Cj se présente sous la forme d'une première portion d'un plot Pk de faible hauteur, sur lequel on reviendra plus loin et dont la seconde portion complémentaire est constituée par un transducteur (ou actionneur) T2k des seconds moyens de transduction. Mais, chaque capteur Cj peut être placé à côté du transducteur T2k qui lui est associé. Chaque plot formant un capteur Cj peut être éventuellement constitué d'un empilement (ou d'une portion d'empilement) d'au moins une couche de matériau piézoélectrique, par exemple de deux à cinq couches. En fait, deux cas sont envisageables. Si les capteurs Cj sont des accéléromètres placés sur l'élément E2 de manière à mesurer ses accélérations et que les actionneurs sont placés sous l'élément E2, une seule couche peut suffire. Si les actionneurs (transducteurs) piézoélectriques T2k remplissent également la fonction de capteur on peut prévoir des empilements multi-couches. En effet, les actionneurs (transducteurs) piézoélectriques T2k étant constitués d'un empilement de couches séparées par des électrodes (afin d'abaisser la tension de commande), quelques couches (typiquement deux à cinq) peuvent ne plus être utilisées comme des actionneurs mais comme des capteurs Cj qui génèrent une tension électrique sous l'effet d'un effort.

Les signaux de mesure (courant) produits par les capteurs Cj sont collectés par un conducteur électrique (par exemple un câble) X2 qui est raccordé au module de contrôle MC.

Comme indiqué ci-avant, le courant électrique, nécessaire au module de contrôle MC pour analyser les signaux de mesure délivrés par le(s) capteur(s) Cj, est le résultat de la conversion de l'énergie de vibration de la première partie S1 de la structure en courant, effectuée par les premiers moyens de transduction T1 i.

Ce module de contrôle MC est chargé de déduire de chaque signal de mesure, qu'il reçoit via le conducteur électrique X2, au moins une amplitude de déplacement destinée à compenser au moins partiellement pour le second élément E2 les vibrations subies par la structure (au niveau de sa seconde partie S2). En présence de plusieurs capteurs Cj, par exemple trois, le module de contrôle MC reçoit trois signaux de mesure représentatifs respectivement des vibrations selon les trois directions d1 à d3. Il peut donc en déduire les trois amplitudes de déplacement que va devoir subir le second élément E2, suivant lesdites trois directions d1 à d3, afin d'amortir quasi-totalement ou partiellement lesdites vibrations.

Le module de contrôle MC transforme chaque amplitude de déplacement qu'il a déduite en un signal de commande (courant) destiné aux seconds moyens de transduction (ou actionneurs) T2k.

On a représenté sur la figure 2, un diagramme qui illustre, d'une part, un exemple de courbe A1 d'évolution temporelle (t) du signal de mesure, délivré par un capteur Cj, par exemple C1, et représentatif des vibrations suivant une direction dj, par exemple d1, et d'autre part, un exemple de courbe A2 d'évolution temporelle du signal de commande, délivré par le module de contrôle MC et représentatif de l'amplitude du déplacement à appliquer au second élément E2 (ici suivant la direction d1) compte tenu de la courbe A1.

Afin de commander les actionneurs (transducteurs) piézoélectriques T2k, on peut utiliser toute technique connue de l'homme de l'art, et notamment celles décrites dans les documents brevets EP 0676558 et EP 1132647.

Il est important de noter que l'équipement I, ou le second élément E2, peut être pourvu de moyens complémentaires (non représentés) destinés à amortir mécaniquement ledit second élément E2 et de capacités d'amortissement connues. De tels moyens d'amortissement peuvent par exemple se présenter sous la forme de lames élastiques solidarisées à la seconde partie S2 de la structure et au second équipement E2 en des endroits choisis. Dans ce cas, le module de commande MC est agencé pour déduire chaque amplitude de déplacement de chaque signal de mesure, compte tenu des capacités d'amortissement des moyens d'amortissement complémentaires, afin que le déplacement total du second élément E2 compense effectivement (au moins partiellement) le déplacement total induit par les vibrations.

Les signaux de commande (courant) produits par le module de commande MC sont collectés par un conducteur électrique (par exemple un câble) X3 qui est raccordé aux seconds moyens de transduction T2k.

Ces seconds moyens de transduction T2k sont intercalés entre la seconde partie S2 de la structure et le second élément E2, tout en leur étant solidarisé. Ils sont chargés de convertir le(s) courants (signaux de commande), délivrés par le module de commande MC, en déplacement(s) afin d'amortir au moins partiellement pour le second élément E2 les vibrations subies par son équipement I (et plus précisément la seconde partie S2 de sa structure).

Ces seconds moyens de transduction T2k sont par exemple réalisés dans un matériau piézoélectrique tel que les monocristaux piézoélectriques. Ils pourraient être également réalisés avec des céramiques piézoélectriques. D'une manière générale, tout type de matériau piézoélectrique peut être utilisé dès lors qu'il permet de générer un déplacement suffisamment important pour compenser l'effet des vibrations dans une direction dj donnée.

Les monocristaux piézoélectriques sont particulièrement intéressants du fait qu'ils possèdent une grande capacité d'allongement, typiquement 2% (ce qui est environ dix fois plus que l'allongement offert par les céramiques piézoélectriques). Cela permet de réaliser des interfaces actives très compactes.

Par exemple, et comme illustré sur la figure 1, les seconds moyens de transduction T2k se présentent sous la forme de trois portions T21 à T23 (k = 1 à 3) de plots Pk identiques et de faibles hauteurs. Plus précisément, dans l'exemple illustré, trois plots P1 à P3 sont intercalés entre la seconde partie S2 de la structure et le second élément E2, chaque plot Pk étant constitué d'une première portion définissant un capteur Pj (avec j = k) et d'une seconde portion complémentaire définissant un transducteur T2k. Ces plots Pk peuvent par exemple être de forme cylindrique à section circulaire (comme illustré).

En fait, à chaque capteur Cj est préférentiellement associé un transducteur (actionneur) T2k (k=j). Mais, il n'est pas obligatoire qu'un capteur Cj fasse partie du même plot Pk que le transducteur T2k qui lui est associé. Ils peuvent être placés l'un à côté de l'autre. Dans ce cas, chaque transducteur T2k constitue un plot Pk qui est solidarisé à la seconde partie S2 de la structure et au second élément E2, tandis que chaque capteur Pj n'est solidarisé qu'à la seconde partie S2 de la structure.

Les plots Pk peuvent par exemple être de forme cylindrique à section circulaire (comme illustré).

Par ailleurs, chaque transducteur T2k peut être éventuellement constitué d'un empilement d'au moins une couche de matériau piézoélectrique. Dans ce cas, le nombre de couches dépend principalement de l'amplitude des vibrations à corriger et de la tension de commande possible.

Lorsqu'un capteur Cj et un transducteur T2k constituent les deux portions complémentaires d'un même plot Pk, ils forment un unique empilement.

Il est important de noter que le dispositif d'amortissement peut ne comporter qu'un capteur Cj et un transducteur T2k associé, ou bien deux capteurs Cj et deux transducteurs T2k associés, et non pas trois capteurs Cj et trois transducteurs T2k associés, comme illustré sur la figure 1.

Grâce à l'utilisation d'un matériau piézoélectrique, les seconds moyens de transduction T2k constituent une seconde interface électromécanique compacte et légère qui constitue un générateur de micro-déplacement(s) k-dimensionnel sans impacter le poids de l'équipement I.

Il est important de noter que le module de contrôle MC peut être éventuellement activé et désactivé à des instants choisis. Plus précisément, le dispositif d'amortissement de vibrations selon l'invention étant destiné à fonctionner lorsque l'équipement I est soumis à des vibrations (importantes), il est préférable que son module de commande MC puisse être activé un peu avant que les vibrations ne débutent et qu'il soit désactivé lorsque les vibrations prennent fin. Par exemple, dans le cas d'un lancement au moyen d'une fusée, le module de commande MC peut être autorisé à fonctionner entre le moment où l'équipement I est placé dans la fusée et le moment où l'équipement I parvient en orbite à l'emplacement prévu pour sa mission (ou bien juste avant que son second élément E2 ne commence à se déployer, si cela est prévu).

Le dispositif est avantageusement autonome et ne nécessite pas d'activation externe. Il s'active en effet automatiquement dès que le niveau de vibration génère une énergie (par exemple une tension) d'alimentation électrique suffisante, ce qui correspond dans la conception à des charges inférieures à celles que l'équipement sensible peut supporter sans compensation.

L'invention ne se limite pas aux modes de réalisation de dispositif d'amortissement de vibrations et d'équipement décrits ci-avant, seulement à titre d'exemple, mais elle englobe toutes les variantes que pourra envisager l'homme de l'art dans le cadre des revendications ci-après.

Ainsi, l'invention s'applique aux situations dans lesquelles sont présentes une, deux ou trois translations, et/ou une, deux ou trois rotations, ou encore au contrôle de micro-vibrations.

## Revendications

1. Dispositif d'amortissement de vibrations pour un équipement (I) devant être déplacé et comportant une structure (S1,S2) à laquelle sont couplés un premier élément (E1) et un second élément fragile (E2) à protéger desdites vibrations, comprenant i) des premiers moyens de transduction piézoélectrique (T1i) intercalés entre ladite structure (S1,S2) et ledit premier élément (E1) et agencés pour convertir l'énergie mécanique de vibration de la structure en énergie électrique, ii) au moins un capteur (Cj) couplé à la structure (S1,S2) et agencé pour délivrer des signaux de mesure représentatifs de vibrations subies par ledit équipement (I), iii) des moyens de contrôle (MC) alimentés électriquement par ladite énergie électrique et agencés pour déduire de chaque signal de mesure au moins une amplitude de déplacement destinée à compenser au moins partiellement lesdites vibrations subies par la structure, et pour délivrer des signaux de commande représentatifs de chaque amplitude déterminée, et iv) des seconds moyens de transduction piézoélectrique (T2k) intercalés entre ladite structure (S1,S2) et ledit second élément (E2) et agencés pour convertir lesdits signaux de commande en déplacement(s) de manière à amortir au moins partiellement pour le second élément (E2) les vibrations subies par ledit équipement (I).

2. Dispositif selon la revendication 1, **caractérisé en ce qu'**il comprend au moins deux capteurs (Cj) agencés pour délivrer des signaux de mesure représentatifs de vibrations subies par ladite structure (S1,S2) suivant des directions différentes, et **en ce que** lesdits seconds moyens de transduction (T2k) comprennent au moins deux transducteurs agencés pour déplacer ledit second élément (E2) selon des directions différentes.

3. Dispositif selon l'une des revendications 1 et 2, **caractérisé en ce que** chaque capteur (Cj) est agencé pour effectuer des mesures de type accélérométrique.

4. Dispositif selon l'une des revendications 1 à 3, **caractérisé en ce que** lesdits premiers moyens de transduction (T1 i) sont réalisés dans un matériau piézoélectrique choisi dans un groupe comprenant au moins des monocristaux piézoélectriques et des céramiques piézoélectriques.

5. Dispositif selon l'une des revendications 1 à 4, **caractérisé en ce que** lesdits seconds moyens de transduction (T2k) et/ou chaque capteur (Cj) sont réalisés dans un matériau piézoélectrique choisi dans un groupe comprenant au moins des monocristaux piézoélectriques et des céramiques piézoélectriques.

6. Dispositif selon la revendication 5, **caractérisé en ce que** lesdits seconds moyens de transduction (T2k) et/ou chaque capteur (Cj) sont constitués d'au moins un empilement d'au moins une couche dudit matériau piézoélectrique.

7. Dispositif selon la combinaison des revendications 2 et 6, **caractérisé en ce que** chaque transducteur desdits seconds moyens de transduction (T2k) et le capteur (Cj) correspondant constituent ensemble deux parties complémentaires d'un même empilement de couches dudit matériau piézoélectrique.

8. Dispositif selon l'une des revendications 1 à 7, **caractérisé en ce qu'**en présence de moyens d'amortissement mécanique du second élément (E2), de capacités d'amortissement connues, lesdits moyens de contrôle (MC) sont agencés pour déduire chaque amplitude de déplacement de chaque signal de mesure, compte tenu desdites capacités d'amortissement.

9. Dispositif selon l'une des revendications 1 à 8, **caractérisé en ce que** lesdits moyens de contrôle (MC) sont agencés pour être activés et désactivés à des instants choisis.

10. Equipement (I), **caractérisé en ce qu'**il comprend au moins un dispositif d'amortissement de vibrations selon l'une des revendications précédentes.

11. Utilisation du dispositif d'amortissement de vibrations et de l'équipement (I) selon l'une des revendications précédentes, dans le domaine spatial.

## Claims

1. A vibration damping device for an item of equipment (I) which is designed to be displaced and which comprises a structure (S1, S2) on which a first element (E1) and a second fragile element (E2) are mounted, whereby the second fragile element is to be protected against said vibrations, comprising i) first piezo-electric transduction means (T1i) disposed between said structure (S1, S2) and said first element (E1) and designed to convert the mechanical vibration energy of the structure in to electrical energy, ii) at least one sensor (Cj) connected to the structure (S1, S2) and designed to deliver measurement signals representing the vibrations experienced by said equipment (I), iii) control means (MC) electrically supplied with said electrical energy and designed to derive from each measurement signal at least one displacement amplitude which is designed to compensate at least partially said vibrations experienced by the structure, and to provide control signals representing each determined amplitude, and iv) second piezo-electric transduction means (T2k) disposed between said structure (S1, S2) and said second element (E2) and designed to convert said control signals in to displacement(s) in order for the second element (E2) to absorb at least partially the vibrations experienced by said equipment (1).

2. The device according to claim 1, **characterised in that** it comprises at least two sensors (Cj) designed to provide measurement signals representing the vibrations experienced by said structure (S1, S2) in different directions, and **in that** said second transduction means (T2k) comprise at least two transducers designed to displace said element (E2) in different directions.

3. The device according to claims 1 or 2, **characterised in that** each sensor (Cj) is designed to perform accelerometric type measurements.

4. The device according to any one of claims 1 to 3, **characterised in that** said first transduction means (T1i) are made from a piezo-electric material selected from a group comprising at least piezo-electric monocrystals and piezo-electric ceramics.

5. The device according to any one of claims 1 to 4, **characterised in that** said second transduction means (T2k) and/or each sensor (Cj) are made from a piezo-electric material selected from a group comprising at least piezo-electric monocrystals and piezo-electric ceramics.

6. The device according to claim 5, **characterised in that** said second transduction means (T2k) and/or each sensor (Cj) are comprised of at least one stack of at least one layer of said piezo-electric material.

7. The device according to the combination of claims 2 and 6, **characterised in that** each transducer of said second transduction means (T2k) and the corresponding sensor (Cj) together constitute two complementary parts of the same stack of layers of said piezo-electric material.

8. The device according to one of claims 1 to 7, **characterised in that** in the presence of the mechanical damping means of the second element (E2), with known damping capacities, said control means (MC) are designed to derive each displacement amplitude of each measurement signal, taking into account said damping capacities.

9. The device according to one of claims 1 to 8, **characterised in that** said control means (MC) are designed to be activated and de-activated at selected times.

10. An item of equipment (I), **characterised in that** it comprises at least one vibration damping device according to one of the previous claims.

11. Use of the vibration damping device and the item of equipment (I), according to one of the previous claims, in the field of space.

## Patentansprüche

1. Vibrationsdämpfungsvorrichtung für einen zu bewegenden Ausrüstungsgegenstand (1), der eine Struktur (S1, S2) umfasst, an der ein erstes Element (E1) und ein zerbrechliches, vor den Vibrationen zu schützendes zweites Element (E2) montiert sind, die Folgendes umfasst: i) erste piezoelektrische Übertragungsmittel (T1i), die zwischen der Struktur (S1, S2) und dem ersten Element (E1) eingefügt und so ausgelegt sind, dass sie die mechanische Vibrationsenergie der Struktur in elektrische Energie umwandeln, ii) wenigstens einen Sensor (Cj), der mit der Struktur (S1, S2) verbunden und so ausgelegt ist, dass er Messsignale liefert, die die von dem Ausrüstungsgegenstand (I) erfahrenen Vibrationen repräsentieren, iii) Steuermittel (MC), die elektrisch mit der elektrischen Energie versorgt werden und so ausgelegt sind, dass sie von jedem Messsignal wenigstens eine Verschiebungsamplitude ableiten, die die von der Struktur erfahrenen Vibrationen wenigstens teilweise kompensieren soll, und Steuersignale bereitstellen, die für jede bestimmte Amplitude repräsentativ sind, und iv) zweite piezoelektrische Übertragungsmittel (T2k), die zwischen der Struktur (S1, S2) und dem zweiten Element (E2) eingefügt und so ausgelegt sind, dass sie die Steuersignale in (eine) Verschiebung(en) umwandelt, damit das zweite Element (E2) die von dem Ausrüstungsgegenstand (I) erfahrenen Vibrationen wenigstens teilweise absorbiert.

2. Vorrichtung nach Anspruch 1, **dadurch gekennzeichnet, dass** sie wenigstens zwei Sensoren (Cj) umfasst, die so ausgelegt sind, dass sie Messsignale bereitstellen, die für von der Struktur (S1, S2) in verschiedenen Richtungen erfahrene Vibrationen repräsentativ sind, und **dadurch**, dass die zweiten Übertragungsmittel (T2k) wenigstens zwei Wandler umfassen, die so ausgelegt sind, dass sie das zweite Element (E2) in verschiedenen Richtungen verschieben.

3. Vorrichtung nach Anspruch 1 oder 2, **dadurch gekennzeichnet, dass** jeder Sensor (Cj) so ausgelegt ist, dass er Beschleunigungsmessungen durchführt.

4. Vorrichtung nach einem der Ansprüche 1 bis 3, **dadurch gekennzeichnet, dass** die ersten Übertragungsmittel (T1i) aus einem piezoelektrischen Material gebildet ist, das ausgewählt ist aus der Gruppe umfassend wenigstens piezoelektrische Monokristalle und piezoelektrische Keramiken.

5. Vorrichtung nach einem der Ansprüche 1 bis 4, **dadurch gekennzeichnet, dass** die zweiten Übertragungsmittel (T2k) und/oder jeder Sensor (Cj) aus einem piezoelektrischen Material gebildet ist, das ausgewählt ist aus der Gruppe umfassend wenigstens piezoelektrische Monokristalle und piezoelektrische Keramiken.

6. Vorrichtung nach Anspruch 5, **dadurch gekennzeichnet, dass** die zweiten Übertragungsmittel (T2k) und/oder jeder Sensor (Cj) aus wenigstens einem Stapel von wenigstens einer Schicht des piezoelektrischen Materials gebildet sind.

7. Vorrichtung nach der Kombination der Ansprüche 2 und 6, **dadurch gekennzeichnet, dass** jeder Wandler der zweiten Übertragungsmittel (Tsk) und der entsprechende Sensor (Cj) zusammen zwei komplementäre Teile desselben Stapels von Schichten des piezoelektrischen Materials bilden.

8. Vorrichtung nach einem der Ansprüche 1 bis 7, **dadurch gekennzeichnet, dass** die Steuermittel (MC) in Anwesenheit des mechanischen Dämpfungsmittels des zweiten Elementes (E2), mit bekannten Dämpfungskapazitäten, so ausgelegt sind, dass sie jede Verschiebungsamplitude jedes Messsignals unter Berücksichtigung der Dämpfungskapazitäten berechnen.

9. Vorrichtung nach einem der Ansprüche 1 bis 8, **dadurch gekennzeichnet, dass** die Steuermittel (MC) so ausgelegt sind, dass sie zu gewählten Zeitpunkten aktiviert und deaktiviert werden.

10. Ausrüstungsgegenstand (I), **dadurch gekennzeichnet, dass** er wenigstens eine Vibrationsdämpfungsvorrichtung nach einem der vorherigen Ansprüche umfasst.

11. Verwendung der Vibrationsdämpfungsvorrichtung und des Ausrüstungsgegenstands (I) nach einem der vorherigen Ansprüche im Raumbereich.
